# EUROPEAN PATENT SPECIFICATION

(11) **EP 3 532 715 B1**
(45) Date of publication and mention of the grant of the patent: **16.06.2021**
(21) Application number: 17864803.6
(22) Date of filing: 26.09.2017
(51) Int. Cl.: F01P 7/16, F01P 3/18, B60K 11/04, F01K 9/00, F01K 23/06, F01N 5/02, F02G 5/04, F01P 3/22

(54) **A COOLING SYSTEM FOR COOLING OF A COMBUSTION ENGINE AND A WHR SYSTEM**
KÜHLSYSTEM ZUR KÜHLUNG EINES VERBRENNUNGSMOTORS UND WHR-SYSTEM
SYSTÈME DE REFROIDISSEMENT POUR REFROIDIR UN MOTEUR À COMBUSTION ET SYSTÈME DE RÉCUPÉRATION DE CHALEUR PERDUE

(30) Priority: 28.10.2016 SE 1651416
(43) Date of publication of application: 04.09.2019
(73) Proprietor: Scania CV AB, 151 87 Södertälje (SE)
(72) Inventor: KARDOS, Zoltan, 151 35 Södertälje (SE); TIMREN, Thomas, 619 91 Trosa (SE); JOHANSSON, Björn, 125 31 Älvsjö (SE); HÖCKERDAL, Erik, 151 44 Södertälje (SE)
(74) Representative: Scania CV AB
(86) International application number: PCT/SE2017/050931
(87) International publication number: WO 2018/080373

(56) References cited:
- EP-A1- 3 064 734
- EP-A2- 1 475 532
- WO-A1-2011/149409
- WO-A1-2016/089276
- WO-A2-2012/021757
- DE-A1-102007 061 032
- DE-A1-102012 209 813
- DE-A1-102014 019 533
- JP-A- 2006 125 375
- US-A1- 2016 178 291

## Description

### BACKGROUND OF THE INVENTION AND PRIOR ART

The present invention relates to a cooling system for cooling of a combustion engine and a WHR system according to the preamble of claim 1.

A WHR system (Waste Heat Recovery System) can be used in vehicles for recovering waste thermal energy and convert it to mechanical energy or electrical energy. A WHR system includes a pump which pressurizes and circulates a working medium in a closed circuit. The closed circuit comprises one or several evaporators where the working medium is heated and evaporated by one or several heat sources such as, for example, the exhaust gases from a combustion engine. The pressurized and heated gaseous working medium is directed to an expander where it expands. The expander generates mechanical energy which can be used to operate the vehicle or apparatuses on the vehicle. Alternatively, the expander is connected to a generator generating electrical energy. The working medium leaving the expander is directed to a condenser. The working medium is cooled in the condenser to a temperature at which it condenses. The liquefied working medium leaving the condenser is redirected to the pump which pressurizes the medium. Thus, the waste heat energy from, for example, the exhaust gases from a combustion engine in a vehicle can be recovered by means of a WHR-system. Consequently, a WHR-system can reduce the fuel consumption of a combustion engine.

In order to achieve a high thermal efficiency in a WHR system, the working medium has to be cooled to a condensation temperature in the condenser as low as possible and substantially without subcooling. Consequently, in order to achieve a suitable condensation temperature in the condenser, the working medium has to be cooled by coolant of a specific temperature and a specific flow rate. The same cooling system may be used to cool the combustion engine and the working medium in the condenser. In order to achieve a high efficiency of the combustion engine, the coolant may be cooled to a temperature of about 90°C in a radiator before it is directed to the combustion engine. In order to achieve a high thermal efficiency of the WHR system, it is usually suitable to direct coolant of a different temperature to the condenser. In case the working medium is ethanol, it is suitable to direct coolant of a temperature of about 60-70°C to the condenser. Such a cooling system is shown in WO 2011/149409A.

### SUMMARY OF THE INVENTION

The object of the present invention is to provide a cooling system which is able to cool a working medium in a condenser in a WHR system and a combustion engine by coolants of two different temperatures in a simple and effective manner.

The above mentioned object is achieved by the cooling system according to claim 1. A cooling system comprising two radiators have possibility to cool the coolant leaving the combustion engine to two different temperatures. The first valve device, which receives coolant from the combustion engine, directs a part of the coolant to the radiator bypass line without cooling and a remaining part of the coolant flow to the radiators for cooling to said two different temperatures. Thus, the cooling system has access to coolants of three different temperatures for cooling of the combustion engine and the working medium in the condenser. By means of the first valve device and the second valve device it is possible to mix the coolants of the three different temperatures in a manner such that coolant of a suitable temperature is directed to combustion engine and coolant of a suitable temperature is directed to the condenser. The control unit may have access to stored information about suitable temperatures of the coolant to be directed to the combustion engine and suitable temperatures of the coolant to be directed to the condenser at different operating conditions.

According to an embodiment of the invention, the first radiator and the second radiator are arranged side by side in a common air stream passage. In this case, the coolants in the respective radiators may be cooled by air of the same temperature. The cooling requirement of modern combustion engines has decreased and thus the demand on a large radiator at a front portion of the vehicle. There is thus space to arrange a second radiator side by side with a first radiator at the front portion of the vehicle. The second radiator cools together with the first radiator the coolant which circulates in the cooling system and cools the combustion engine and the working medium in the condenser of the WHR system. Alternatively, it is possible to arrange the second radiator in a position upstream of the first radiator.

According to an embodiment of the invention, the first radiator and the second radiator are designed such that the coolant is cooled to a lower temperature in the second radiator than in the first radiator. In case, the coolant is cooled in parallel in a first radiator and a second radiator of the same size, it is possible to reduce the coolant flow to the second radiator such that the coolant flow through the second radiator will be smaller than the coolant flow through the first radiator. In this case, the coolant flows with a slower velocity through the second radiator than through the first radiator. Thus, the coolant in the second radiator is subjected to a cooling air stream during a longer time period than the coolant in the first radiator. As a result, the coolant in the second radiator is cooled to a temperature closer to the temperature of the cooling air than the coolant in the first radiator. Alternatively or in combination, the second radiator may be larger than the first radiator or having a design providing a more efficient cooling of the coolant than the first radiator.

According to an embodiment of the invention, the cooling system comprises a coolant line directing coolant from an inlet tank of the first radiator to an inlet tank of the second radiator. The coolant line may be provided with a relatively small flow area such that a relatively small part of the coolant entering the inlet tank is passed on to the inlet tank of the second radiator. Alternatively, the tubes in the second radiator may provide a narrower flow path than the tubes in the first radiator. Alternatively, the first radiator comprises an inlet tank which at a bottom is fixedly connected, via a coolant passage, to an upper portion of an inlet tank of the second radiator. In this case, the coolant passage may be provided with a flow restricting area.

According to an embodiment of the invention, the cooling system comprises a coolant line directing coolant from an outlet tank of the first radiator to an inlet tank of the second radiator. In this case, a first part of the coolant flow is directed through the first radiator and a remaining second part of the coolant flow is directed through the first radiator and the second radiator. Thus, the second part of the coolant flow is cooled in the first radiator and the second radiator in series which ensure that the coolant leaving the second radiator has a lower temperature than the coolant leaving the first radiator.

According to an embodiment of the invention, the cooling system comprises a condenser outlet line directing coolant from the condenser to the engine inlet line. Thus, the coolnt directed to the combustion engine is a mixture of coolant from the radiator bypass line, the first radiator and the condenser outlet line.

According to an embodiment of the invention, the first valve device is a first three way valve. The first three way valve may receive an inlet receiving a coolant flow from the engine outlet line and a first outlet directing a part of the received coolant to the radiator bypass line and a second outlet directing a remaining part of the received coolant to the radiators. The first valve device may have a substantially corresponding task as a thermostat in a conventional cooling system. Preferably, the first three way valve device is adjustable in a stepless manner. In this case, it is possible to vary the coolant flow rate to the radiators and the radiator bypass line with a high accuracy. In this case, the first valve device is designed as a single valve unit. Alternatively, the first valve device is designed as two two way valves wherein a first two way valve is arranged in the radiator bypass line and a second two way valve is arranged in a radiator inlet line.

According to an embodiment of the invention, the second valve device is a second three way valve. The second three way valve has an inlet receiving coolant from the first radiator and a first outlet directing a part of the received coolant to the condenser and a second outlet directing a remaining part of the coolant to a condenser bypass line. Preferably, the second three way valve valve device is adjustable in a stepless manner. In this case, it is possible to adjust the coolant flow rate from the first radiator to the condenser and the condenser bypass line with a high accuracy. In this case, the second valve device is designed as a single valve. Alternatively, the second valve device is designed as two two way valves wherein a first two way valve is arranged in the condenser inlet line and a second two way valve is arranged in the condenser bypass line.

According to an embodiment of the invention, the control unit is configured to receive information from a sensor sensing a parameter related to the actual condensing temperature/pressure of the working medium in the condenser. In case there is a difference between the actual temperature/pressure in the condenser and the desired condensation temperature/pressure, the control unit may adjust the first valve device and/or the second valve device in order to change the cooling of the working medium in the condenser in a manner such that said difference is eliminated.

According to an embodiment of the invention, the control unit is configured to control the first valve device and the second valve device such that the coolant directed to the condenser has a temperature and a flow rate which results in a cooling of the working medium in the condenser to a condensation pressure just above 1 bar. It is during the most operating conditions possible to direct a coolant flow to the condenser which results in a cooling of the working medium in the condenser to a desired condensation temperature/pressure. However, by practical reasons, it is many times suitable to avoid negative pressures in a WHR-system. In this case, it is suitable to obtain a condensation pressure just above 1 bar. The desired pressure range may, for example, be in the range 1, 1 - 1, 5 bar. It is to be noted that a condensation pressure for a working medium has a corresponding condensation temperature. The working medium in the WHR-system may be ethanol. Ethanol has an evaporation temperature of about 78°C at 1 bar. It is relatively easy to accomplish a coolant temperature at a suitable level below the evaporation temperature of ethanol and cool the ethanol in a condenser to a condensation temperature just above 78°C. However, it is possible to use other working mediums such as for example R265fa.

According to an embodiment of the invention, the control unit is configured to receive information from a number of temperature sensors configured to sense the temperature of the coolant in different positions of the cooling system and to control the first valve device and the second member by means of this information. The control unit may be configured to receive information from temperature sensors configured to sense the temperature of the coolant in the engine outlet line, the temperature of the coolant leaving the first radiator and the temperature of the coolant leaving the second radiator. In this case, the control unit has temperature information of all accessible coolants which can be mixed by means of the first valve device and the second valve device and be delivered to the combustion engine and the condenser. Alternatively or in combination, the coolant may receive information about the temperature of the coolant in the engine inlet line and the temperature of the coolant in the condenser inlet line. In such a case, the control unit receives a direct feedback about the temperatures of the coolants directed to the combustion engine and the condenser.

### BRIEF DESCRIPTION OF THE DRAWINGS

In the following preferred embodiments of the invention is described, as examples, with reference to the attached drawings, in which:
- Fig. 1: shows a cooling system according to the invention,
- Fig. 2: shows the first radiator and the second radiator in Fig. 1 more in detail,
- Fig. 3: shows an alternative embodiment of the first radiator and the second radiator and
- Fig. 4: shows a further alternative embodiment of the first radiator and the second radiator.

### DETAILED DESCRIPTION OF PREFERRED EMBODIMENTS OF THE INVENTION

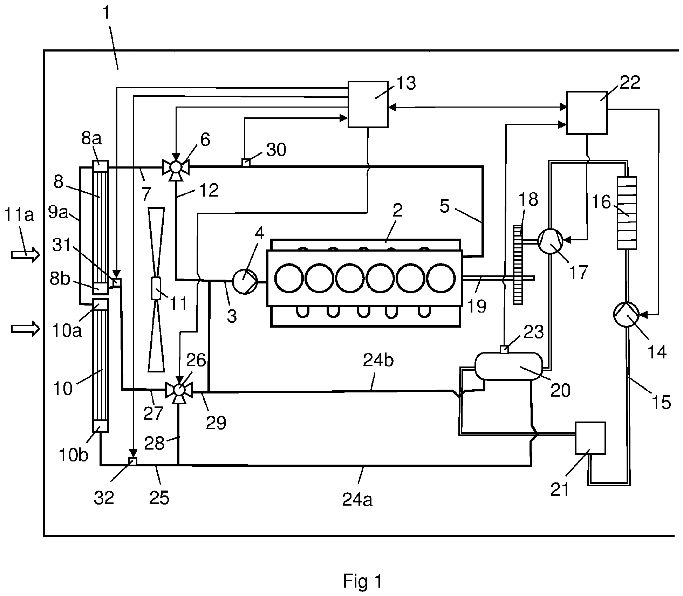

Fig. 1 shows a schematically disclosed vehicle 1 powered by a combustion engine 2. The vehicle 1 may be a heavy vehicle and the combustion engine 2 may be a diesel engine. The vehicle 1 comprises a cooling system comprising an engine inlet line 3 provided with a pump 4 circulating a coolant in the cooling system. The pump 4 circulates the coolant through the combustion engine 2. When the coolant has cooled the combustion engine 2, it is received in an engine outlet line 5. A first valve device in the form of a first three way valve 6 is arranged at an end of the engine outlet line 5. The cooling system comprises a radiator inlet line 7 directing coolant to an inlet tank 8a of a first radiator 8. A connection line 9a directs coolant from inlet tank 8a of a first radiator 8 to an inlet tank 10a of a second radiator 10. A radiator fan 11 provides a cooling air stream through the first radiator 8 and the second radiator 10. The first radiator 8 and the second radiator 10 are arranged side by side. Thus, the coolant are cooled with air of the same temperature in the radiators 8, 10. The cooling system comprises a radiator bypass line 12 directing coolant past the first radiator 8 and the second radiator 10. The first three way valve 6 is controlled by a control unit 13. The first three way valve 6 is adjustable in a stepless manner. The first three way valve 6 receives coolant from the engine outlet line 5 and direct a part of the coolant to the radiator bypass line 12 and a remaining part of the coolant to the radiator inlet line 7.

The vehicle is provided with a WHR-system (Waste Heat Recovery system). The WHR- system comprises a pump 14 which pressurizes and circulates a working medium in a closed circuit 15. In this case, the working medium is ethanol. However, it is possible to use other kinds of working mediums such as for example R265fa. The pump 14 pressurizes and circulates the working medium to an evaporator 16. The working medium is heated in the evaporator 16, for example, by exhaust gases from the combustion engine. The working medium is heated in the evaporator 16 to a temperature at which it evaporates. The working medium is circulated from the evaporator 16 to the expander 17. The pressurised and heated working medium expands in the expander 17. The expander 17 generates a rotary motion which may be transmitted, via a suitable mechanical transmission 18, to a shaft 19 of the power train of the vehicle 1. Alternatively, the expander 17 may be connected to a generator transforming mechanical energy into electrical energy. The electrical energy may be stored in a battery. The stored electrical energy can be supplied to an electrical engine for driving of the vehicle or a component on the vehicle in a later state.

After the working medium has passed through the expander 17, it is directed to a condenser 20. The working medium is cooled in the condenser 20 by coolant from the cooling system to a temperature at which it condenses. The working medium is directed from the condenser 20 to a receiver 21. The pressure in the receiver 21 can be varied by means of a pressure regulator. The pump 14 sucks working medium from the receiver 21. A second control unit 22 controls the operation of the WHR-system. The second control unit 22 controls the operation of the pump 14 and the expander 17. The WHR-system makes it possible to transform thermal energy from the exhaust gases to mechanical energy or electrical energy. A temperature sensor 23 or a pressure sensor senses the condensation temperature or the condensation pressure in the condenser 20. It is favourable to establish a condensation pressure as low as possible. However, it is suitable to avoid negative pressure in the WHR-system by practical reasons. In view of these facts, it is suitable to provide a cooling of the working medium in the condenser 20 to a condensation pressure just above 1bar. Consequently, in order to maintain a high thermal efficiency it is necessary to adjust the cooling effect of the working medium in the condenser 20 such that the condensation pressure will be just above 1 bar. The working medium ethanol has a condensation temperature of 78°C at 1 bar. In this case, it is suitable to accomplish a condensation temperature of just above 78°C in the condenser 20.

The cooling system comprises a condenser inlet line 24a directing coolant to the condenser 20. Coolant from an outlet tank 10b of the second radiator is directed, via a second radiator outlet line 25, to the condenser inlet line 24a. A return line 24b directs coolant from the condenser 20 to the engine inlet line 3. A second valve device in the form of a second three way valve 26 receives coolant from an outlet tank 8b of the first radiator 8a via a first radiator outlet line 27. The second three way valve 26 is controlled by the control unit 13. The second three way valve 26 is adjustable in a stepless manner. The second three way 26 valve directs a part of the coolant flow from first radiator outlet line 27, via a coolant line 28, to the condenser inlet line 24a. The coolant flow from the first radiator 8 and the second radiator 10 is mixed in the condenser inlet line 24a. The second three way 26 valve directs a remaining part of the coolant flow to a condenser bypass line 29. An initial temperature sensor 30 senses the temperature T₀ of the coolant in the engine outlet line 5. A first temperature sensor 31 senses the temperature T₁ of the coolant in the first radiator outlet line 27 and a second temperature sensor 32 senses the temperature T₂ of the coolant in the second radiator outlet line 25.

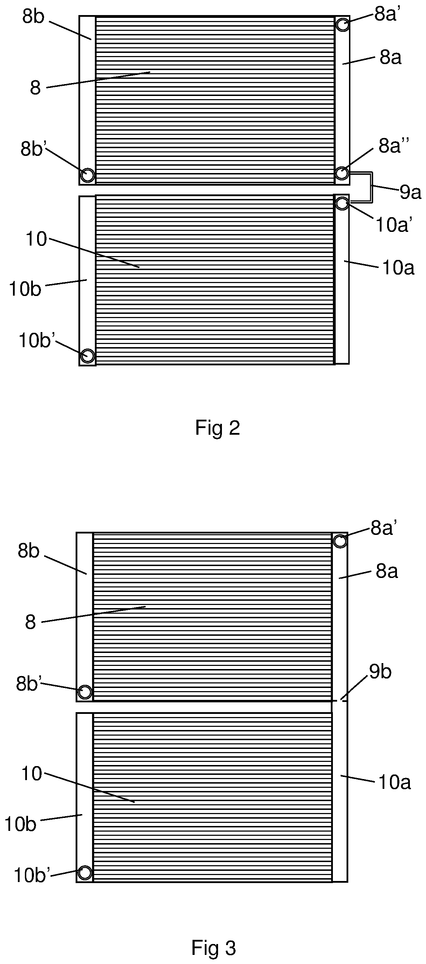

Fig. 2 shows a view of the first radiator 8 and the second radiator 10 in Fig. 1. The coolant from the radiator inlet line 7 is, via an inlet port 8a', directed to the inlet tank 8a of the first radiator 8. A first part of the coolant flow is cooled in the first radiator 8. The first part of the coolant flow is received in an outlet tank 8b before it is directed, via an outlet port 8b', to the first radiator outlet line 27. A second part of the coolant flow entering the inlet tank 8a of the first radiator 8 is directed, via an outlet port 8a", a coolant line 9a and an inlet port 10a', to an inlet tank 10a of the second radiator 10. When the second part of the coolant has been cooled in the second radiator 10, it is received in the second radiator outlet tank 10b and directed, via an outlet 10b'to the second radiator outlet line 25. In this case, a coolant passage in the form of a coolant line 9a is used for directing coolant from the first radiator 8 to the second radiator 10. The coolant line 9a has a relatively small cross section area. Consequently, the flow resistance through the second radiator will be higher than the flow resistance through the first radiator 8. Thus, the second part of the coolant flow through the second radiator 10 will be smaller than the first coolant flow through the first radiator 8. The smaller coolant flow through the second radiator 10 makes it possible to cool the coolant to a lower temperature in the second radiator than in the first radiator. An alternative way to provide a higher flow resistance in the second radiator 10 than in the first radiator 8, it is to design the coolant tubes in the second radiator 10 with narrower coolant tubes than in the first radiator 8. A further alternative is to provide the coolant line 9a or the second radiator outlet line 25 with a throttle.

During operation, the control unit 13 receives substantially continuously information from said temperature sensors 30, 31, 32 about the actual coolant temperatures. The control unit 13 also receives information from the second control unit 22 about the operating condition of the WHR system. The control unit 13 may, for example, receive information from the sensor 23 about the actual condensation temperature in the condenser 20. The control unit 13 estimates a desired condensation temperature of the working medium in the condenser 20. When ethanol is used as working medium, a condensation temperature of about 80°C is desirable during most operating conditions. The control unit 13 estimates a suitable temperature of the coolant to be directed to the condenser 20 in order to provide the desired condensation temperature. Furthermore, the control unit 13 estimates a suitable temperature of the coolant to be directed to the combustion engine 2. A suitable temperature of the coolant directed to the combustion engine 2 may be of about 90°C. A suitable temperature of the coolant directed to the condenser 20 may be within the temperature range 60-70°C.

The initial temperature T₀ of the coolant in the engine outlet line 5 indicates the cooling demand of the coolant in the cooling system. In case the initial temperature To of the coolant in the engine outlet line 5 is low, the control unit 13 adjusts the three way valve 6 such that it directs a small part of the coolant flow to the radiator line 7 and a remaining large part of the coolant flow to the radiator bypass line 12. In case the initial temperature T₀ of the coolant in the engine outlet line 5 is high, the control unit 13 adjusts the three way valve 6 such that it directs a large part of the coolant flow to the radiator inlet line 7 and a remaining small part of the coolant flow to the radiator bypass line 12. Thus, the coolant flow rate to the radiator inlet line 7 and the coolant flow rate to the radiator bypass line 12 can be varied by the first three way valve 6. A first part of the coolant flow directed to the radiator inlet line 7 is cooled in the first radiator 8 to a first temperature T₁ and a second part of the coolant flow is cooled in the second radiator to a second temperature T₂. The second temperature T₂ is lower than the first temperature T₁.

In view of information from the temperature sensors 30, 31, 32 about the actual coolant temperatures T₀, T₁, T₂, the control unit 13 estimates a suitable positioning of the first three way valve 6 and the second three way valve 26. The first valve device 6 and the second valve device 26 are controlled in a manner such that the coolant directed to the combustion engine 2 obtains a temperature of about 90°C. The coolant flow to the combustion engine is a mixture of the coolant flows in the radiator bypass line 12, the condenser bypass line 29 and the condenser return line 24b. The first valve device 6 and the second valve device 26 are controlled in a manner such that the coolant directed to the condenser 20 obtains a temperature of about 60-70°. The coolant flow to the condenser is a mixture of the coolant flows in first radiator outlet line 27 and the second radiator outlet line 25.

Fig. 3 shows an alternative embodiment of the first radiator 8 and the second radiator 10. In this case, the inlet tanks 8a, 10a of the first radiator 8 and the second radiator 10 are connected to each other, via a coolant passage 9b, such that they form a coherent inlet tank body. The coolant passage 9b comprises a reduced flow area in relation to the flow areas in the respective inlet tanks 8a, 10a. The coolant passage 9b restrict the coolant flow to the second inlet tank 10a, such that a main part of the coolant flow is directed through the first radiator 8. Consequently, the coolant flow through the second radiator 10 will be lower than the coolant flow through the first radiator which results in cooling of the coolant to a lower temperature in the second radiator 10 than in the first radiator 8.

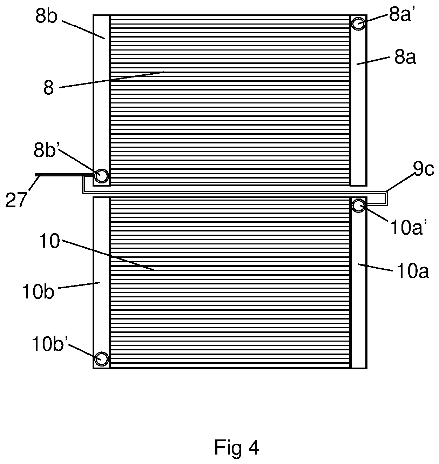

Fig. 4 shows a further alternative embodiment of the radiators 8, 10. In this case, the entire coolant flow from the radiator inlet line 7 is directed through the first radiator 8. A first part of the coolant flow leaving the first radiator 8 is directed to the first radiator outlet line 27 and a remaining second part of the coolant flow leaving the first radiator 8 is directed, via a coolant line 9c, to an inlet tank 10a of the second radiator 10. The second part of the coolant flow is cooled in a second step in the second radiator 10. The cooling of the coolant in the second step in the second radiator 10 ensures that the coolant is cooled to a lower temperature in the second radiator 10 than in the first radiator 8.

The invention is not restricted to the described embodiment but may be varied freely within the scope of the claims.

## Claims

1. A cooling system for cooling of a combustion engine (2) and a WHR-system in a vehicle (1), wherein the cooling system comprises an engine inlet line (3) directing a circulating coolant to the combustion engine (2), a condenser inlet line (24a) directing coolant to a condenser (20) in which it is configured to cool a working medium in the WHR- system, a first radiator (8) configured to cool coolant to a first temperature (T₁), a second radiator (10) configured to receive coolant from the first radiator (8) and to cool the coolant to a second temperature (T₂) before the coolant is directed to the condenser inlet line (24a), a radiator bypass line (12) directing coolant past the radiators (8, 10) and to the engine inlet line (3), a first valve device (6) configured to receive coolant from an engine outlet line (5) and direct it to the radiator bypass line (12) and/or to the radiators (8, 10), **characterized in that** the cooling system comprises a second valve device (26) configured to receive coolant from the first radiator (8) and direct it to the condenser inlet line (24a) and /or, via a condenser bypass line (29), to the engine inlet line (3), and a control unit (13) configured to control the first valve device (6) and the second valve device (26) such that coolant of a suitable temperature is directed , via the engine inlet line (3), to the combustion engine (2) and that coolant of a suitable temperature is directed, via the condenser inlet line (24a), to the condenser (20).

2. The cooling system according to claim 1, **characterized in that** the first radiator (8) and the second radiator (10) are arranged side by side in a common air stream passage (11a).

3. The cooling system according to claim 1 or 2, **characterized in that** the first radiator (8) and the second radiator (10) are designed such that the coolant is cooled to a lower temperature in the second radiator (10) than in the first radiator (8).

4. The cooling system according to any one of the preceding claims, **characterized in that** the cooling system comprises a coolant line (9a) directing coolant from an inlet tank (8a) of the first radiator (8) to an inlet tank (10a) of the second radiator (10).

5. The cooling system according to any one of the preceding claims 1-3, **characterized in that** the first radiator (8) comprises an inlet tank (8a) which at a bottom portion is fixedly connected, via a coolant passage (9b), to an upper portion of an inlet tank (10a) of the second radiator (10).

6. The cooling system according to any one of the preceding claims 1-3, **characterized in that** the cooling system comprises a coolant line (9c) directing coolant from an outlet tank (8a) of the first radiator (8) to an inlet tank (10a) of the second radiator (10).

7. The cooling system according to any one of the preceding claims, **characterized in that** the cooling system comprises a condenser outlet line (24b) directing coolant from the condenser (20) to the engine inlet line (3).

8. The cooling system according to any one of the preceding claims, **characterized in that** the first valve device is a three way valve (6).

9. The cooling system according to any one of the preceding claims, **characterized in that** the second valve device is a three way valve (26).

10. The cooling system according to any one of the preceding claims, **characterized in that** the control unit (10) is configured to receive information from a sensor (23) about the temperature or the pressure of the working medium in the condenser (20).

11. The cooling system according to any one of the preceding claims, **characterized in that** the control unit (10) is configured to control the first valve device (6) and the second valve device (26) such that the coolant directed to the condenser (20) has a temperature and a flow rate which results in a cooling of the working medium in the condenser (20) to a condensation pressure just above 1 bar.

12. The cooling system according to any one of the preceding claims, **characterized in that** the control unit (13) is configured to receive information from a number of temperature sensors (30, 31, 32, 33, 34) configured to sense the temperature of the coolant in different positions of the cooling system and to control the first valve device (6) and the second valve device (26) by means of this information.

13. The cooling system according to claim 12, **characterized in that** the control unit (13) is configured to receive information from temperature sensors (30, 31, 32) configured to sense the temperature of the coolant in the engine outlet line (5), the temperature (T₁) of the coolant leaving the first radiator (8) and the temperature (T₂) of the coolant leaving the second radiator (10).

## Patentansprüche

1. Kühlsystem zum Kühlen eines Verbrennungsmotors (2) und eines WHR-Systems in einem Fahrzeug (1), wobei das Kühlsystem eine Motoreinlassleitung (3), die ein zirkulierendes Kühlmittel zu dem Verbrennungsmotor (2) leitet, eine Kondensatoreinlassleitung (24a), die Kühlmittel zu einem Kondensator (20) leitet, in dem es zum Kühlen eines Arbeitsmediums in dem WHR-System konfiguriert ist, einen ersten Kühler (8), der so konfiguriert ist, dass er Kühlmittel auf eine erste Temperatur (T₁) kühlt, einen zweiten Kühler (10), der so konfiguriert ist, dass er Kühlmittel von dem ersten Kühler (8) empfängt und das Kühlmittel auf eine zweite Temperatur (T₂) kühlt, bevor das Kühlmittel zu der Kondensatoreinlassleitung (24a) geleitet wird, eine Kühlerumgehungsleitung (12), die Kühlmittel an den Kühlern (8, 10) vorbei und zu der Motoreinlassleitung (3) leitet, und eine erste Ventilvorrichtung (6), die so konfiguriert ist, dass sie Kühlmittel von einer Motorauslassleitung (5) empfängt und es zu der Kühlerumgehungsleitung (12) und/oder zu den Kühlern (8, 10) leitet, umfasst, **dadurch gekennzeichnet, dass** das Kühlsystem eine zweite Ventilvorrichtung (26), die so konfiguriert ist, dass sie Kühlmittel von dem ersten Kühler (8) empfängt und es zu der Kondensatoreinlassleitung (24a) und/oder über eine Kondensatorumgehungsleitung (29) zu der Motoreinlassleitung (3) leitet, und eine Steuereinheit (13) umfasst, die so konfiguriert ist, dass sie die erste Ventilvorrichtung (6) und die zweite Ventilvorrichtung (26) so steuert, dass Kühlmittel einer geeigneten Temperatur über die Motoreinlassleitung (3) zu dem Verbrennungsmotor (2) geleitet wird und dass Kühlmittel einer geeigneten Temperatur über die Kondensatoreinlassleitung (24a) zu dem Kondensator (20) geleitet wird.

2. Kühlsystem nach Anspruch 1, **dadurch gekennzeichnet, dass** der erste Kühler (8) und der zweite Kühler (10) nebeneinander in einem gemeinsamen Luftstromkanal (11a) angeordnet sind.

3. Kühlsystem nach Anspruch 1 oder 2, **dadurch gekennzeichnet, dass** der erste Kühler (8) und der zweite Kühler (10) so ausgebildet sind, dass das Kühlmittel in dem zweiten Kühler (10) auf eine niedrigere Temperatur abgekühlt wird als in dem ersten Kühler (8).

4. Kühlsystem nach einem der vorhergehenden Ansprüche, **dadurch gekennzeichnet, dass** das Kühlsystem eine Kühlmittelleitung (9a) umfasst, die Kühlmittel von einem Einlassbehälter (8a) des ersten Kühlers (8) zu einem Einlassbehälter (10a) des zweiten Kühlers (10) leitet.

5. Kühlsystem nach einem der vorhergehenden Ansprüche 1 bis 3, **dadurch gekennzeichnet, dass** der erste Kühler (8) einen Einlassbehälter (8a) umfasst, der an einem unteren Abschnitt über einen Kühlmitteldurchlass (9b) fest mit einem oberen Abschnitt eines Einlassbehälters (10a) des zweiten Kühlers (10) verbunden ist.

6. Kühlsystem nach einem der vorhergehenden Ansprüche 1 bis 3, **dadurch gekennzeichnet, dass** das Kühlsystem eine Kühlmittelleitung (9c) umfasst, die Kühlmittel von einem Auslassbehälter (8a) des ersten Kühlers (8) zu einem Einlassbehälter (10a) des zweiten Kühlers (10) leitet.

7. Kühlsystem nach einem der vorhergehenden Ansprüche, **dadurch gekennzeichnet, dass** das Kühlsystem eine Kondensatorauslassleitung (24b) umfasst, die Kühlmittel von dem Kondensator (20) zu der Motoreinlassleitung (3) leitet.

8. Kühlsystem nach einem der vorhergehenden Ansprüche, **dadurch gekennzeichnet, dass** die erste Ventilvorrichtung ein Dreiwegeventil (6) ist.

9. Kühlsystem nach einem der vorangehenden Ansprüche, **dadurch gekennzeichnet, dass** die zweite Ventilvorrichtung ein Dreiwegeventil (26) ist.

10. Kühlsystem nach einem der vorhergehenden Ansprüche, **dadurch gekennzeichnet, dass** die Steuereinheit (10) so konfiguriert ist, dass sie von einem Sensor (23) Informationen über die Temperatur oder den Druck des Arbeitsmediums in dem Kondensator (20) empfängt.

11. Kühlsystem nach einem der vorhergehenden Ansprüche, **dadurch gekennzeichnet, dass** die Steuereinheit (10) so konfiguriert ist, dass sie die erste Ventilvorrichtung (6) und die zweite Ventilvorrichtung (26) so steuert, dass das zu dem Kondensator (20) geleitete Kühlmittel eine Temperatur und eine Durchflussmenge aufweist, die zu einer Kühlung des Arbeitsmediums in dem Kondensator (20) auf einen Kondensationsdruck knapp über 1 bar führt.

12. Kühlsystem nach einem der vorhergehenden Ansprüche, **dadurch gekennzeichnet, dass** die Steuereinheit (13) so konfiguriert ist, dass sie Informationen von einer Anzahl von Temperatursensoren (30, 31, 32, 33, 34) empfängt, die so konfiguriert sind, dass sie die Temperatur des Kühlmittels in verschiedenen Positionen des Kühlsystems erfassen, und dass sie die erste Ventilvorrichtung (6) und die zweite Ventilvorrichtung (26) mit Hilfe dieser Informationen steuert.

13. Kühlsystem nach Anspruch 12, **dadurch gekennzeichnet, dass** die Steuereinheit (13) so konfiguriert ist, dass sie Informationen von Temperatursensoren (30, 31, 32) empfängt, die so konfiguriert sind, dass sie die Temperatur des Kühlmittels in der Motorauslassleitung (5), die Temperatur (T₁) des den ersten Kühler (8) verlassenden Kühlmittels und die Temperatur (T₂) des den zweiten Kühler (10) verlassenden Kühlmittels erfassen.

## Revendications

1. Système de refroidissement pour refroidir un moteur à combustion (2) et un système WHR dans un véhicule (1), dans lequel le système de refroidissement comprend une conduite d'entrée de moteur (3) dirigeant un fluide de refroidissement en circulation vers le moteur à combustion (2), une conduite d'entrée de condenseur (24a) dirigeant un liquide de refroidissement vers un condenseur (20) dans lequel il est configuré pour refroidir un fluide moteur dans le système WHR, un premier radiateur (8) configuré pour refroidir un liquide de refroidissement jusqu'à une première température (T₁), un deuxième radiateur (10) configuré pour recevoir un liquide de refroidissement du premier radiateur (8) et pour refroidir le liquide de refroidissement jusqu'à une deuxième température (T₂) avant que le liquide de refroidissement ne soit dirigé vers la conduite d'entrée de condenseur (24a), une ligne de dérivation de radiateur (12) dirigeant le liquide de refroidissement au-delà des radiateurs (8, 10) et vers la conduite d'entrée de moteur (3), un premier dispositif de soupape (6) configuré pour recevoir un liquide de refroidissement depuis une conduite de sortie de moteur (5) et le diriger vers la conduite de dérivation de radiateur (12) et/ou vers les radiateurs (8, 10), caractérisé en que le système de refroidissement comprend un deuxième dispositif de soupape (26) configuré pour recevoir du liquide de refroidissement depuis le premier radiateur (8) et le diriger vers la conduite d'entrée de condenseur (24a) et/ou via une ligne de dérivation de condenseur (29), vers la conduite d'entrée de moteur (3), et une unité de commande (13) configurée pour commander le premier dispositif de soupape (6) et le deuxième dispositif de soupape (26) de telle sorte que le liquide de refroidissement d'une température appropriée est dirigé, via la conduite d'entrée de moteur (3), vers le moteur à combustion (2) et en ce que le liquide de refroidissement d'une température appropriée est dirigé, via la conduite d'entrée de condenseur (24a), vers le condenseur (20).

2. Système de refroidissement selon la revendication 1, **caractérisé en ce que** le premier radiateur (8) et le deuxième radiateur (10) sont agencés côte à côte dans un passage d'écoulement d'air commun (Ha).

3. Système de refroidissement selon la revendication 1 ou 2, **caractérisé en ce que** le premier radiateur (8) et le second radiateur (10) sont conçus de telle sorte que le liquide de refroidissement est refroidi jusqu'à une température plus basse dans le deuxième radiateur (10) que dans le premier radiateur (8).

4. Système de refroidissement selon l'une quelconque des revendications précédentes, **caractérisé en ce que** le système de refroidissement comprend une ligne de liquide de refroidissement (9a) dirigeant le liquide de refroidissement depuis un réservoir d'entrée (8a) du premier radiateur (8) vers un réservoir d'entrée (10a) du deuxième radiateur (10).

5. Système de refroidissement selon l'une quelconque des revendications précédentes 1 à 3, **caractérisé en ce que** le premier radiateur (8) comprend un réservoir d'entrée (8a) qui, au niveau d'une partie inférieure, est raccordé de manière fixe, via un passage de liquide de refroidissement (9b), à une partie supérieure d'un réservoir d'entrée (10a) du second radiateur (10) .

6. Système de refroidissement selon l'une quelconque des revendications 1 à 3, **caractérisé en ce que** le système de refroidissement comprend une ligne de liquide de refroidissement (9c) dirigeant le liquide de refroidissement depuis un réservoir de sortie (8a) du premier radiateur (8) vers un réservoir d'entrée (10a) du second radiateur (10).

7. Système de refroidissement selon l'une quelconque des revendications précédentes, **caractérisé en ce que** le système de refroidissement comprend une conduite de sortie de condenseur (24b) dirigeant le liquide de refroidissement depuis le condenseur (20) vers la conduite d'entrée de moteur (3).

8. Système de refroidissement selon l'une quelconque des revendications précédentes, **caractérisé en ce que** le premier dispositif de soupape est une soupape à trois voies (6).

9. Système de refroidissement selon l'une quelconque des revendications précédentes, **caractérisé en ce que** le deuxième dispositif de soupape est une soupape à trois voies (26).

10. Système de refroidissement selon l'une quelconque des revendications précédentes, **caractérisé en ce que** l'unité de commande (10) est configurée pour recevoir des informations depuis un capteur (23) concernant la température ou la pression du fluide moteur dans le condenseur (20).

11. Système de refroidissement selon l'une quelconque des revendications précédentes, **caractérisé en ce que** l'unité de commande (10) est configurée pour commander le premier dispositif de soupape (6) et le deuxième dispositif de soupape (26) de telle sorte que le liquide de refroidissement dirigé vers le condenseur (20) a une température et un débit qui provoque un refroidissement du fluide moteur dans le condenseur (20) jusqu'à une pression de condensation juste supérieure à 1 bar.

12. Système de refroidissement selon l'une quelconque des revendications précédentes, **caractérisé en ce que** l'unité de commande (13) est configurée pour recevoir des informations depuis un certain nombre de capteurs de température (30, 31, 32, 33, 34) configurés pour capter la température du liquide de refroidissement dans différentes positions du système de refroidissement et pour commander le premier dispositif de soupape (6) et le deuxième dispositif de soupape (26) au moyen de ces informations.

13. Système de refroidissement selon la revendication 12, **caractérisé en ce que** l'unité de commande (13) est configurée pour recevoir des informations depuis des capteurs de température (30, 31, 32) configurés pour capter la température du liquide de refroidissement dans la conduite de sortie de moteur (5), la température (T₁) du liquide de refroidissement quittant le premier radiateur (8) et la température (T₂) du liquide de refroidissement quittant le deuxième radiateur (10).
